Europäisches Patentamt

European Patent Office

Office européen des brevets

(19)

(11) Publication number: **0 291 536 B1**

## EUROPEAN PATENT SPECIFICATION

(12)

(45) Date of publication of patent specification: **07.04.93**  (51) Int. Cl.[5]: **C08F  12/08**

(21) Application number: **87907349.2**

(22) Date of filing: **09.11.87**

(86) International application number:
**PCT/JP87/00863**

(87) International publication number:
**WO 88/03540 (19.05.88 88/11)**

(54) **PROCESS FOR PREPARING STYRENIC POLYMERS.**

(30) Priority: **10.11.86 JP 267227/86**

(43) Date of publication of application:
**23.11.88 Bulletin  88/47**

(45) Publication of the grant of the patent:
**07.04.93 Bulletin  93/14**

(84) Designated Contracting States:
**BE CH DE FR GB IT LI NL SE**

(56) References cited:
**EP-A- 0 224 097**
**JP-B- 468 988**

**Okamura Seiyo et al. (Authors) "Kobunshi Kagaku Joron", 1 May 1970, Kagaku Dojin P.40-48 (2.2 Kobunshi no Bunshiryo to Bunshiryo Bunpu no Ko)**

(73) Proprietor: **IDEMITSU KOSAN COMPANY LIMITED**
**1-1, Marunouchi 3-chome Chiyoda-ku Tokyo(JP)**

(72) Inventor: **KURAMOTO, Masahiko Idemitsu Kosan Company Limited**
**1280, Kamiizumi Sodegauramachi Kimitsu-gun**
**Chiba 299-02(JP)**
Inventor: **ISHIHARA, Nobuhide Idemitsu Kosan Company Limited**
**1280, Kamiizumi Sodegauramachi Kimitsu-gun**
**Chiba 299-02(JP)**
Inventor: **NAKANO, Akikazu Idemitsu Kosan Company Limited**
**1280, Kamiizumi Sodegauramachi Kimitsu-gun**
**Chiba 299-02(JP)**

(74) Representative: **Türk, Gille, Hrabal, Leifert**
**Brucknerstrasse 20**
**W-4000 Düsseldorf 13 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.5x/3.0.1)

**Description**

TECHNICAL FIELD

The present invention relates to a method for the preparation of a styrene-based polymer and, more particularly, to a method for the preparation of a styrene-based polymer composed, substantially, of an isotactic structure and syndiotactic structure by using a specific catalyst.

BACKGROUND ART

In general, steric structures of styrene-based polymers such as polystyrene and poly(p-methylstyrene) can be classified as the isotactic structure, syndiotactic structure or atactic structure depending on the steric configuration of the pendant groups relative to the polymeric molecular chain. Styrene-based polymers having the isotactic structure, among them, can be prepared by the polymerization using a so-called Ziegler catalyst and styrene-based polymers having the atactic structure can be prepared by the free-radical polymerization.

No prior art method is known, however, for the preparation of a styrene-based polymer having the syndiotactic structure except that the present inventors have recently succeeded in obtaining a styrene-based polymer having a substantially syndiotactic structure (see Japanese Patent Kokai 62-104818). For example, EP-A-0 224 097 (Art 54 (3),(4) EPC) refers to a process for producing styrene polymers having a high syndiotactic structure which comprises polymerizing styrene or styrene derivatives by the use of a catalyst comprising a) a titanium compound, preferably a titanium compound containing halogen, and b) a contact product of an organoaluminum compound and a condensation agent, preferably, a product resulting from modification of trimethylaluminum with water.

Such process for polymerizing styrene to a polystyrene having a high syndiotactic structure using a catalyst comprising a) titanium tetrachloride, magnesium chloride and ethylbenzoate and b) methylaluminoxane is also disclosed in EP-A-0 210 615. (Art. 54 (3),(4) EPC)

An object of the present invention is to efficiently produce a styrene-based polymer having binary structures of the isotactic structure and syndiotactic structure.

DISCLOSURE OF THE INVENTION

The present invention provides a method for the preparation of a styrene-based polymer composed, substantially, of the isotactic structure and syndiotactic structure comprises, in carrying out polymerization of a styrene compound in the presence of a catalyst, which contains as the principal ingredients (a) a solid substance containing titanium and a halogen and being insoluble in hydrocarbons, and (b) a reaction product of an alkyl aluminum compound and water, in combination, wherein in the used catalyst the halogen-containing titanium compound is deposited on a magnesium compound selected from the group consisting of $MgCl_2$, $Mg(OR)Cl$, $Mg(OR)_2$, $Mg(OH)Cl$, $Mg(OH)_2$ and $Mg(OCOR)_2$ wherein R is an alkyl group, said magnesium compound containing an electron-donor compound, provided that such electron-donor compound is not ethylbenzoate in the case that the halogen-containing titanium compound is titaniumtetrachloride and the magnesium compound is magnesium chloride.

In the method of the present invention, styrenes or styrene derivatives are used as starting materials, and they are polymerized using catalyst composed mainly of the ingredients (a) and (b). The proportion of the ingredients (a) and (b) in the catalyst has influence on the proportion of the isotactic structure and the syndiotactic structure in the resultant styrene-based polymer.

BRIEF DESCRIPTION OF THE DRAWING

FIGURES 1 to 4 each show a signal assignable to the $C_1$ carbon of the aromatic ring appearing in the $^{13}$C-NMR diagram of the polymer obtained in Examples 1 to 4, respectively.

FIGURES 5 to 7 each show a signal assignable to the $C_1$ carbon of the aromatic ring appearing in the $^{13}$C-NMR diagram of the syndiotactic, isotactic and atactic polystyrenes, respectively, obtained in Comparative Examples 1 to 3, respectively.

BEST MODE FOR CARRYING OUT THE INVENTION

The ingredient (a) in the catalyst system of the present invention is a solid material containing titanium and a halogen and insoluble in hydrocarbons. The solid material here implied are insoluble in hydrocarbons such as aliphatic, alicyclic and aromatic hydrocarbons at room temperature or at an elevated temperature. Typical examples of such a titanium- and halogen-containing solid material insoluble in such a hydrocarbon solvent include titanium halides such as titanium trichloride $TiCl_3$, titanium tribromide $TiBr_3$ and titanium triiodide $TiI_3$, optionally, containing an aluminum compound such as aluminum chloride $AlCl_3$ or forming a complex with an electron donor such as ethers, esters, ketones and amines. Further, these titanium halide compounds are supported on magnesium compounds as carriers selected from the group consisting of $MgCl_2$, $Mg(OR)Cl$, $Mg(OR)_2$, $Mg(OH)Cl$, $Mg(OH)_2$ and $Mg(OCOR)_2$, in which R is an alkyl group. The carrier-supported material can be prepared by the treatment of the magnesium compound with a halogen- or alkoxy-containing titanium compound, containing an electron-donor compound such as ethers, esters, ketones and amines. Suitable solid materials can be obtained also by the treatment of a titanium compound such as titanium tetrachloride $TiCl_4$ with an organic magnesium compound, containing an electron donor compound as mentioned above.

The ingredient (b) is a reaction product of an alkyl aluminum and water. Various kinds of alkyl aluminum compounds can be used for the purpose including those represented by the general formula $AlR_3$, in which R is an alkyl group having 1 to 8 carbon atoms, exemplified by trimethyl aluminum, triethyl aluminum, triisopropyl aluminum and triisobutyl aluminum, of which trimethyl aluminum is preferred.

When an alkyl aluminum is reacted with water to give the ingredient (b) of the catalyst system used in the method of the present invention, the resultant product is composed mainly of an alkyl aluminoxane. The reaction of an alkyl aluminum compound and water can be performed in several different ways. For example, the alkyl aluminum compound is dissolved in an organic solvent and the solution is brought into contact with water. Alternatively, the alkyl aluminum compound is added to the polymerization mixture at the start of the polymerization reaction followed by subsequent addition of water to cause the reaction in situ. The water to be reacted with the alkyl aluminum compound may not be free water but water of crystallization contained in a metal salt and the like can be utilized therefor.

The reaction product of an alkyl aluminum compound and water can be used alone as the ingredient (b) of the catalyst system used in the inventive method but the ingredient (b) may be a mixture of such a reaction product and the unreacted alkyl aluminum compound without particular drawbacks.

The catalyst system used in the inventive method, which is composed mainly of the above described ingredients (a) and (b), may optionally contain other ingredients according to need. Although the optimum proportion of the ingredients (a) and (b) in the catalyst system should adequately be controlled depending on the types of the respective ingredients, kind of the styrene compound to be polymerized, conditions of the polymerization reaction and other factors, the catalyst system should usually contain the ingredients (a) and (b) in such a proportion that the atomic ratio Al/Ti of the aluminum in the ingredient (b) to the titanium in the ingredient (a) is in the range from 1 to $10^6$ or, preferably, from 10 to $10^4$.

The atomic ratio Al/Ti in the catalyst system is a determinant factor of the stereospecificity in the styrene-based polymer as the product of the inventive method having influence on the proportion of the isotactic structure and the syndiotactic structure. Namely, the isotactic structure is predominant in the polymer molecules over the syndiotactic structure when the atomic ratio Al/Ti is small in the catalyst system. Increase of the atomic ratio Al/Ti in the catalyst system has an effect to increase the predominance of the syndiotactic structure over the isotactic structure in the polymer.

The styrene compound to be polymerized according to the inventive method includes styrene and various kinds of derivatives of styrene exemplified by methyl styrenes, e.g., p-, m- and o-methyl styrenes, dimethyl styrenes, e.g., 2,4-, 2,5-, 3,4- and 3,5-dimethyl styrenes, ethyl styrenes, e.g., p-, m- and o-ethyl styrenes, isopropyl styrenes, e.g., p-, m- and o-isopropyl styrenes, tert-butyl styrenes, e.g., p-, m- and o-tert-butyl styrenes, and other alkyl-substituted styrenes as well as halogen-substituted styrenes, e.g., p-, m- and o-chloro styrenes, p-, m- and o-bromo styrenes and p-, m- and o-fluoro styrenes.

The polymerization reaction of the above named styrene compound in the presence of the specific catalyst system according to the inventive method should usually be performed in a hydrocarbon solvent which may be aliphatic, alicyclic or aromatic although the polymerization reaction can proceed even without addition of any solvent. The polymerization temperature is not limited but, from the practical standpoint, it should be in the range from -30 to +90°C, or, preferably, from 0 to +60°C.

When the polymerization reaction is performed under the above described conditions, the product is a binary stereo-specific styrene-based polymer composed, substantially, of the isotactic structure and the syndiotactic structure. The relative predominance of the syndiotactic structure to the isotactic structure in the styrene-based polymer obtained according to the inventive method is usually in the range from 95:5 to 5:95 or, mostly, from 90:10 to 10:90 in the pentad determined by analysis of $^{13}$C-NMR and can be controlled according to desire by adequately selecting the conditions in the polymerization reaction including the atomic ratio Al/Ti in the catalyst system used for the polymerization.

In the following, the method of the present invention is illustrated in more detail by way of Examples and Comparative Examples.

Preparation Example 1.

(1) Preparation of the ingredient (b)

The ingredient (b) in the catalyst system was prepared in the following manner. Thus, 47.4 ml (0.492 mole) of trimethyl aluminum and 35.5 g (0.142 mole) of copper sulfate pentahydrate were reacted at 20°C for 24 hours in 200 ml of toluene as the solvent followed by removal of the solid matter to give a toluene solution containing 12.4 g of methyl aluminoxane as a constituent of aluminum compound to serve as the ingredient (b) of the catalyst system.

Example 1.

(1) Preparation of the ingredient (a)

The ingredient (a) in the catalyst system was prepared in the following manner. Thus, 2.0 g (18 m moles) of magnesium diethoxide were dispersed in 100 ml of dehydrated n-heptane contained in a three-necked flask of 200 ml capacity with agitation followed by the addition of 0.53 g (3.5 m moles) of ethyl benzoate at room temperature and then dropwise addition of 34 g (180 m moles) of titanium tetrachloride and the reaction mixture in the flask was heated for 3 hours under reflux to effect the reaction. After completion of the reaction, the supernatant was discarded and the solid matter was repeatedly washed with n-heptane by decantation to give a solid material to serve as the ingredient (a) of the catalyst system. This solid material contained 40 mg of titanium per g of the carrier as determined by the spectrophotometric analysis.

(2) Polymerization of styrene

Into a reaction vessel of 500 ml capacity were introduced 100 ml of toluene, the above obtained ingredient (a) in an amount of 0.2 m mole calculated as titanium and the methyl aluminoxane as the ingredient (b) prepared in Preparation Example 1 in an amount of 10 m moles calculated as aluminum to form a mixture into which 50 ml of styrene were added at 50°C and the polymerization reaction was performed for 2 hours at this temperature. After completion of the reaction, the product was washed with a mixture of methyl alcohol and hydrochloric acid to decompose and remove the catalyst ingredients followed by drying to give 1.33 g of a polymer.

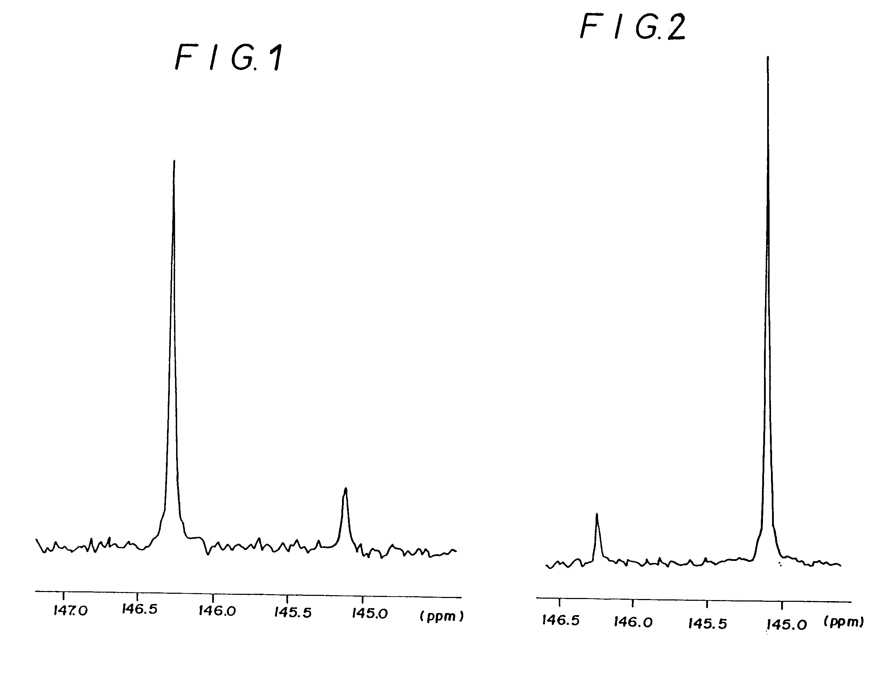

The thus obtained polymer was subjected to extraction with methyl ethyl ketone as the solvent in a Soxhlet extractor to leave 71.6% by weight of the unextracted matter. The table given below summarizes several data relevant to this polymer product. FIGURE 1 in the accompanying drawing shows a signal assignable to the $C_1$ carbon of the aromatic ring appearing in the $^{13}$C-NMR diagram of the unextractable fraction of the polymer left after extraction with methyl ethyl ketone.

Example 2.

Into a reaction vessel of 500 ml capacity were introduced 100 ml of toluene, the ingredient (a) prepared in Example 1 in an amount of 0.02 m mole calculated as titanium and the methyl aluminoxane as the ingredient (b) prepared in Preparation Example 1 in an amount of 10 m moles calculated as aluminum to form a mixture into which 50 ml of styrene were added at 50 °C and the polymerization reaction was performed for 2 hours at this temperature. After completion of the reaction, the product was washed with a mixture of methyl alcohol and hydrochloric acid to decompose and remove the catalyst ingredients followed by drying to give 0.49 g of a polymer.

The thus obtained polymer was subjected to extraction with methyl ethyl ketone as the solvent in a Soxhlet extractor to leave 60.0% by weight of the unextracted matter. The table given below summarizes several data relevant to this polymer product. FIGURE 2 in the accompanying drawing shows a signal

assignable to the $C_1$ carbon of the aromatic ring appearing in the $^{13}$C-NMR diagram of the unextractable fraction of the polymer left after extraction with methyl ethyl ketone.

Example 3.

Into a reaction vessel of 500 ml capacity were introduced 100 ml of toluene, the ingredient (a) prepared in Example 1 in an amount of 0.02 m mole calculated as titanium and the methyl aluminoxane as the ingredient (b) prepared in Preparation Example 1 in an amount of 20 m moles calculated as aluminum to form a mixture into which 50 ml of styrene were added at 50 °C and the polymerization reaction was performed for 2 hours at this temperature. After completion of the reaction, the product was washed with a mixture of methyl alcohol and hydrochloric acid to decompose and remove the catalyst ingredients followed by drying to give 0.62 g of a polymer.

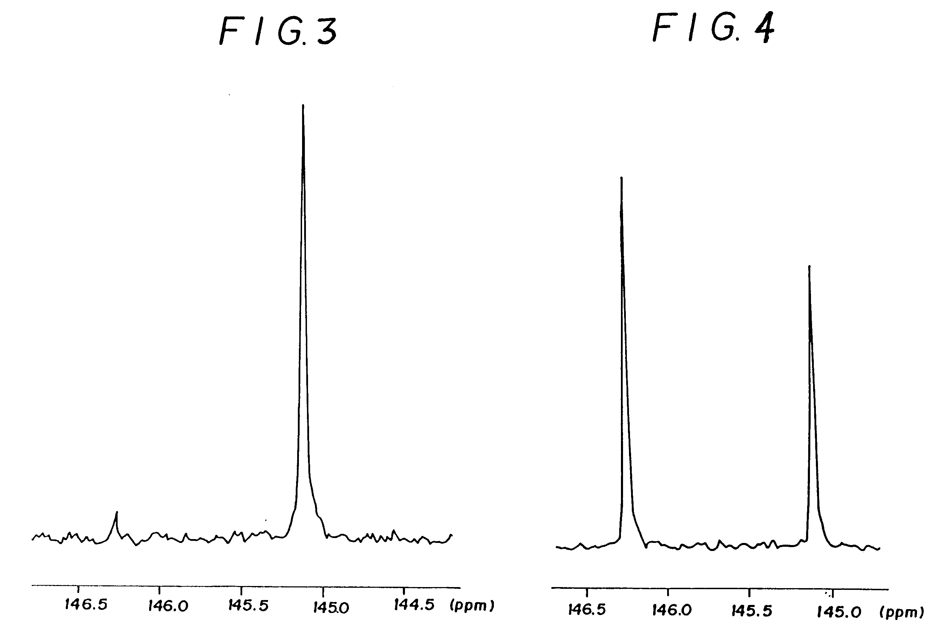

The thus obtained polymer was subjected to extraction with methyl ethyl ketone as the solvent in a Soxhlet extractor to leave 51.9% by weight of the unextracted matter. The table given below summarizes several data relevant to this polymer product. FIGURE 3 in the accompanying drawing shows a signal assignable to the $C_1$ carbon of the aromatic ring appearing in the $^{13}$C-NMR diagram of the unextractable fraction of the polymer left after extraction with methyl ethyl ketone.

Example 4.

(1) Preparation of the ingredient (a)

The ingredient (a) of the catalyst system was prepared in the following manner. Thus, 2.0 g (18 m moles) of magnesium diethoxide were dispersed in 30 ml of dehydrated n-heptane contained in a three-necked flask of 200 ml capacity with agitation followed by the addition of 0.42 g (4.4 m moles) of carbon tetrachloride and 0.54 g (1.8 m moles) of titanium tetraisopropoxide at room temperature. The mixture in the flask was heated to 80°C and kept for 2 hours at this temperature to effect the reaction. After completion of the reaction, the supernatant of the reaction mixture was discarded and the solid material was washed twice at room temperature by decantation using 100 ml of dehydrated n-heptane. Thereafter, 30 ml of dehydrated n-heptane and 0.5 g (3.5 m moles) of ethyl benzoate were added to the solid material and the mixture was heated at 98°C for 1 hour to effect the reaction. Further, 34 g (180 m moles) of titanium tetrachloride were added dropwise to the mixture in the flask and the mixture was heated at 98°C for 3 hours. After completion of the reaction, the solid material in the reaction mixture was repeatedly washed with n-heptane by decantation to give a solid material to serve as the ingredient (a) of the catalyst system. This solid material contained 26 mg of titanium per g of the carrier as determined by the spectrophotometric analysis.

(2) Polymerization of styrene

Into a reaction vessel of 500 ml capacity were introduced 100 ml of toluene, the above obtained ingredient (a) in an amount of 0.02 m mole calculated as titanium and the methyl aluminoxane as the ingredient (b) prepared in Preparation Example 1 in an amount of 10 m moles calculated as aluminum to form a mixture, into which 50 ml of styrene were added at 50°C and the polymerization reaction was performed for 2 hours at this temperature. After completion of the reaction, the product was washed with a mixture of methyl alcohol and hydrochloric acid to decompose and remove the catalyst ingredients followed by drying to give 1.63 g of a polymer.

The thus obtained polymer was subjected to extraction with methyl ethyl ketone as the solvent in a Soxhlet extractor to leave 83.8% by weight of the unextracted matter. The table given below summarizes several data relevant to this polymer product. FIGURE 4 in the accompanying drawing shows a signal assignable to the $C_1$ carbon of the aromatic ring appearing in the $^{13}$C-NMR diagram of the unextractable fraction of the polymer left after extraction with methyl ethyl ketone.

Table

| Example No. | (b)Al/(a)Ti *1 (atomic ratio) | Polystyrene product | | | | |
|---|---|---|---|---|---|---|
| | | Yield (g) | Unextractable fraction with MEK *2 (% by weight) | Syn/Iso *3 | Weight-average molecular weight | Number-average molecular weight |
| 1 | 50 | 1.33 | 71.6 | 16/84 | 1,098,000 | 79,600 |
| 2 | 500 | 0.49 | 60.0 | 88/12 | 597,600 | 234,100 |
| 3 | 1000 | 0.62 | 51.9 | 90/10 | 354,400 | 165,200 |
| 4 | 500 | 1.63 | 83.8 | 43/57 | 814,400 | 421,200 |

*1 Atomic ratio of aluminum in the ingredient (b) to titanium in the ingredient (a).

*2 Unextractable fraction with methyl ethyl ketone.

*3 Relative predominance of the syndiotactic structure over the isotactic structure calculated from the intensity ratio of the pentad absorption at 145.13 ppm by the syndiotactic polystyrene to the pentad absorption at 146.26 ppm by the isotactic polystyrene in the 13C-NMR diagram (solvent: 1,2,4-trichlorobenzene).

Reference Example 1 (Preparation of a syndiotactic polystyrene)

Into a glass vessel of 500 ml capacity equipped with a stirrer were 100 ml of toluene, methyl aluminoxane in an amount of 40 m moles calculated as aluminum atoms and 0.05 m mole of cyclopentadienyl titanium trichloride to form a mixture into which 180 ml of styrene were added at 20°C and the polymerization reaction was performed for 1 hour at this temperature.

After then, methyl alcohol was added to the reaction system to stop the polymerization reaction. The product was washed with a mixture of methyl alcohol and hydrochloric acid to decompose and remove the catalyst ingredients followed by drying to give 16.5 g of a polystyrene. This polystyrene had a weight-average molecular weight of 280,000, a number-average molecular weight of 57,000. Further, this polystyrene was subjected to extraction for 4 hours in a Soxhlet extractor with methyl ethyl ketone as the solvent to give 97% by weight of the unextracted matter.

This unextracted polystyrene had a melting point of 260°C and a specific gravity of 1.043.

Comparative Example 1.

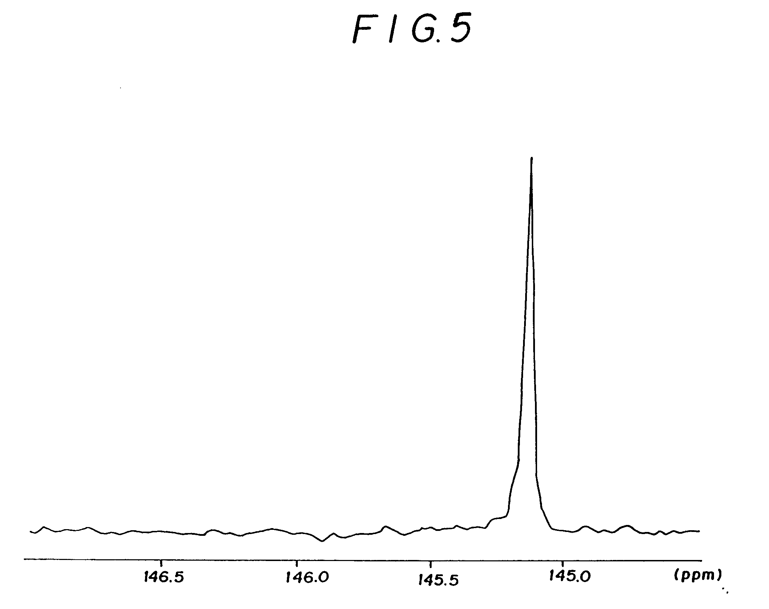

FIGURE 5 in the accompanying drawing shows a signal assignable to the $C_1$ carbon of the aromatic ring appearing in the $^{13}$C-NMR diagram of this syndiotactic polystyrene prepared in Reference Example 1.

Reference Example 2.

A hundred ml of styrene was polymerized at 70°C for two hours in a heptane solvent by the use of a catalyst consisting of 1.0 m mole of a titanium catalyst ingredient depositing titanium compound as obtained by reacting 10.0 g of magnesium diethoxide with 50 ml of titanium tetrachloride, and 10 m mole of triethylaluminum, to obtain 48.7 g of isotactic polystyrene having a weight average molecular weight of 1,000,000. This polystyrene was extracted with methyl ethyl ketone in the same manner as in Reference Example 1 to give 96% by weight of the unextracted matter.

Comparative Example 2.

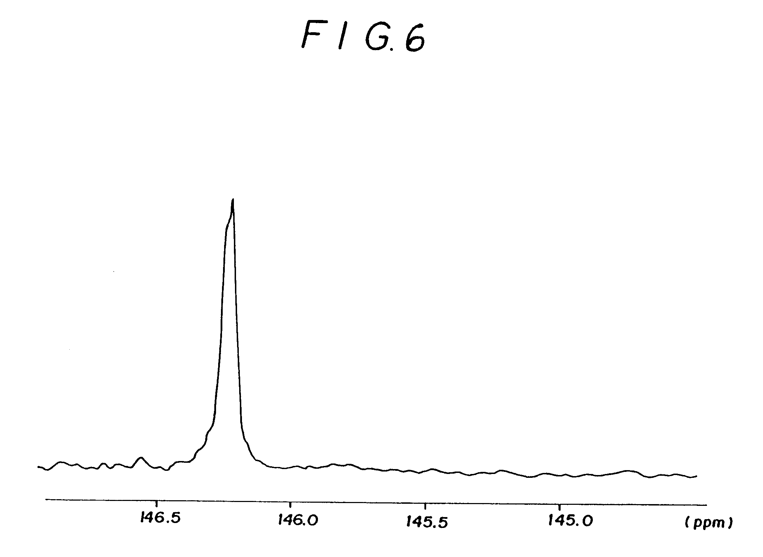

FIGURE 6 in the accompanying drawing shows a signal assignable to the $C_1$ carbon of the aromatic ring appearing in the $^{13}$C-NMR diagram of this isotactic polystyrene prepared in Reference Example 2.

Reference Example 3.

Atactic polystyrene obtained by radical polymerizing styrene at 0°C by the use of an organic peroxide was extracted with methyl ethyl ketone in the same manner as in Reference Example 1. The whole of the polystyrene was extracted. The polystyrene had a glass transition temperature of 100°C and a specific gravity of 1.05.

Comparative Example 3.

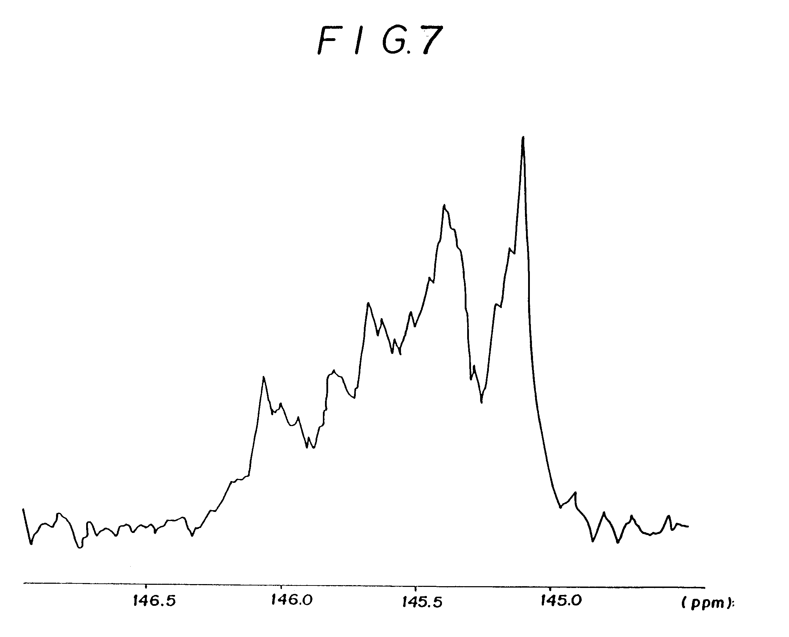

FIGURE 7 in the accompanying drawing shows a signal assignable to the $C_1$ carbon of the aromatic ring appearing in the $^{13}$C-NMR diagram of this atactic polystyrene prepared in Reference Example 3.

INDUSTRIAL APPLICABILITY

According to the inventive method, a new binary stereo-specific styrene-based polymer composed of the isotactic and syndiotactic structures can be prepared.

The styrene-based polymer thus obtained is excellent in heat resistance, moldability and mechanical strength. Polymer mixture obtained by blending a syndiotactic polystyrene and an isotactic polystyrene in the molten state is similar to styrene-based polymer obtained by the inventive method in properties.

A great deal of energy is, however, needed to prepare the polymer mixture, and the resultant polymer mixture becomes undesirably degenerate.

Therefore, styrene-based polymer obtained by the inventive method has excellent properties which can not result from conventional polystyrenes.

The styrene-based polymer is widely and efficiently utilized as a molding material, a structural material and an electric insulation material.

**Claims**

1. A method for the preparation of a binary stereospecific styrene-based polymer composed, substantially, of the isotactic structure and the syndiotactic structure by carrying out the polymerization of the styrene compound in the presence of a catalyst, which contains as the principal ingredients (a) a solid substance containing titanium and a halogen and being insoluble in hydrocarbons, and (b) a reaction product of an alkyl aluminum compound and water, in combination, wherein in the used catalyst the halogen-containing titanium compound is deposited on a magnesium compound selected from the group consisting of $MgCl_2$, $Mg(OR)Cl$, $Mg(OR)_2$, $Mg(OH)Cl$, $Mg(OH)_2$ and $Mg(OCOR)_2$ wherein R is an alkyl group, said magnesium compound containing an electron-donor compound, provided that such electron-donor compound is not ethylbenzoate in the case that the halogen-containing titanium compound is titaniumtetrachloride and the magnesium compound is magnesium chloride.

2. The method as claimed in claim 1 wherein the ingredient (b) of the catalyst is a product formed by contacting trimethyl aluminum with water.

3. The method as claimed in claim 1 or 2, wherein the halogen-containing titanium compound is titanium tetrachloride, and the magnesium compound is magnesium diethoxide.

**Patentansprüche**

1. Verfahren zur Herstellung eines binären stereospezifischen Styrolpolymeren, welches im wesentlichen aus der isotaktischen Struktur und der syndiotaktischen Struktur aufgebaut ist, in dem die Polymerisation der Styrol-Verbindung in Gegenwart eines Katalysators durchgeführt wird, welcher als Hauptbestandteile (a) eine feste Substanz, welche Titan und ein Halogen enthält, die in Kohlenwasserstoffen unlöslich ist, und (b) ein Reaktionsprodukt einer Alkylaluminium-Verbindung und Wasser in Kombination enthält, worin in dem verwendeten Katalysator die halogenhaltige Titan-Verbindung auf einer Magnesiumverbindung abgeschieden ist, welche aus der Gruppe bestehend aus $MgCl_2$, $Mg(OR)Cl$, $Mg(OR)_2$, $Mg(OH)Cl$, $Mg(OH)_2$ und $Mg(OCOR)_2$ ausgewählt ist, worin R eine Alkylgruppe ist; die genannte Magnesiumverbindung enthält eine Elektron-Donor-Verbindung, vorausgesetzt, daß diese Elektron-Donor-Verbindung nicht Ethylbenzoat ist, im Falle, daß die halogenhaltige Titanverbindung Titantetrachlorid ist, und die Magnesiumverbindung Magnesiumchlorid ist.

2. Verfahren nach Anspruch 1, worin der Bestandteil (b) des Katalysators ein Produkt ist, welches durch Inkontaktbringen von Trimethylaluminium mit Wasser gebildet wird.

3. Verfahren nach Anspruch 1 oder 2, worin die halogenhaltige Titanverbindung Titantetrachlorid ist und die Magnesiumverbindung Magnesiumdiethoxid ist.

**Revendications**

1. Procédé de préparation d'un polymère stéréospécifique binaire à base de styrène, présentant essentiellement une structure isotactique et une structure syndiotactique, qui consiste à réaliser la polymérisation du composé de styrène en présence d'un catalyseur contenant en combinaison, comme ingrédients principaux, (a) une substance solide renfermant du titane et un halogène et insoluble dans les hydrocarbures, et (b) un produit de la réaction d'un composé d'alkylaluminium avec de l'eau, procédé dans lequel, dans le catalyseur utilisé, le composé de titane contenant l'halogène est déposé sur un composé du magnésium choisi dans le groupe formé par $MgCl_2$, $Mg(OR)Cl$, $Mg(OR)_2$, $Mg(OH)Cl$, $Mg(OH)_2$ et $Mg(OCOR)_2$, où R est un groupe alkyle, ledit composé de magnésium contenant un composé donneur d'électrons, sous réserve que ce composé donneur d'électrons ne soit pas du benzoate d'éthyle dans le cas où le composé de titane contenant l'halogène est du tétrachlorure de titane et le composé de magnésium est du chlorure de magnésium.

2. Procédé tel que revendiqué dans la revendication 1, dans lequel l'ingrédient (b) du catalyseur est un produit formé par mise en contact de triméthylaluminium avec de l'eau.

3. Procédé tel que revendiqué dans la revendication 1 ou 2, dans lequel le composé de titane contenant l'halogène est du tétrachlorure de titane, et le composé de magnésium est du diéthylate de magné-

sium.

F I G. 1

F I G. 2

EP 0 291 536 B1

# FIG.3

146.5    146.0    145.5    145.0    144.5   (ppm)

# FIG.4

146.5    146.0    145.5    145.0   (ppm)

EP 0 291 536 B1

# FIG.5

146.5    146.0    145.5    145.0    (ppm)

EP 0 291 536 B1

FIG. 6

# F I G. 7

146.5    146.0    145.5    145.0    ( ppm ):

EP 0 291 536 B1